Europäisches Patentamt

European Patent Office

Office européen des brevets

(11) Veröffentlichungsnummer: **0 658 610 A1**

## (12) EUROPÄISCHE PATENTANMELDUNG

(21) Anmeldenummer: **94119228.8**

(22) Anmeldetag: **06.12.94**

(51) Int. Cl.6: **C09J 133/06**

(30) Priorität: **16.12.93 DE 4342893**

(43) Veröffentlichungstag der Anmeldung:
**21.06.95 Patentblatt 95/25**

(84) Benannte Vertragsstaaten:
**AT BE CH DE DK ES FR GB GR IE IT LI LU NL PT SE**

(71) Anmelder: **Lohmann GmbH & Co. KG**
**Irlicher Strasse 55**
**D-56567 Neuwied (DE)**

(72) Erfinder: **Czech, Zbigniew, Dr. Dipl.-Chem.**
**Rostocker Str. 10**
**D-56075 Koblenz (DE)**
Erfinder: **Herrmann, Fritz, Dr. Dipl.-Chem.**
**Rheinheldestrasse 12c**
**D-56567 Neuwied (DE)**

(74) Vertreter: **Flaccus, Rolf-Dieter, Dr.**
**Patentanwalt**
**Sperlingsweg 32**
**D-50389 Wesseling (DE)**

(54) **Reversibel haftende, rückstandsfrei wieder ablösbare Haftklebemasse, Verfahren zu deren Herstellung und Verwendung als wiederverklebbare Haftklebeartikel.**

㊿ Eine reversibel haftende, rückstandsfrei wiederablösbare Haftklebemasse ist aus einem Gemisch der folgenden Komponenten zusammengesetzt:

a) zwischen 40 und 91 Gew.-Anteilen hydrophilgruppenhaltigem Copolymerisat auf Polyacrylatbasis erhältlich aus 40 bis 70 Gew.-Anteilen eines Acrylsäurealkylesters mit 2 bis 10 Kohlenstoffatomen im Alkylrest, 10 bis 55 Gew.-Anteilen einer Vinylcarbonsäure und 5 bis 20 Gew.-Anteilen eines (Meth-)acrylsäurehydroxyalkylesters,

b) zwischen 9,9 und 58 Gew.-Anteilen von Propantriol-1,2,3 und

c) zwischen 0,1 und 2 Gew.-Anteilen eines Vernetzungsmittels.

EP 0 658 610 A1

Rank Xerox (UK) Business Services
(3.10/3.09/3.3.4)

EP 0 658 610 A1

Die vorliegende Erfindung betrifft druckempfindliche reversibel haftende Selbstklebemassen, die nach der Verklebung rückstandsfrei abgelöst und erneut verklebt werden können sowie Verfahren zu ihrer Herstellung und ihre Verwendung.

Der Einsatz von reversibel haftenden Artikeln ist bekannt und wurde in zunehmendem Ausmaß in diversen industriellen Branchen praktiziert. Derartige Haftkleberartikel werden in der Praxis beispielsweise als reversibel klebende Haftklebeetiketten, Haftklebeschablonen, Abdeckmaterialien, Schutzfolien und Notizzettel zur Kennzeichnung, Werben, Fixieren oder als Montagehilfe eingesetzt.

In der Patentliteratur sind zahlreiche Beispiele für die Zusammensetzung und Herstellung von wiederhaftenden Haftklebemassen bekannt.

In der EP-A 0 149 135 wird ein rückstandsfreies wieder ablösbares, haftklebriges Flächengebilde beschrieben, das durch kalottenförmige Haftstellen - hergestellt durch eine im Siebdruckverfahren beschichtete Dispersion - konstruiert wurde. Eine derartige Konstruktion ist zum Verkleben von ebenen Oberflächen jedoch ungeeignet.

In der DE-PS 36 31 635 wird ein wiederablösbares Klebblatt oder -band beschrieben, in dem die Klebschicht einen Stoff aus der Gruppe der Poly(vinylidenchlorid)harze oder Poly(vinylacetat)harze enthält. Die so hergestellten Klebeblätter oder -bänder weisen jedoch zu starke Haftung zu den zu verklebenden Substraten auf.

Die EP-B 0 276 557 beschreibt ein Verfahren zur Herstellung eines abnehmbaren und wiederaufbringbaren Klebefolienproduktes, in dem eine Haftklebemasse in Form einer Lösung oder Dispersion auf den Träger aufgesprüht und die flüchtigen Bestandteile entfernt werden. Der Nachteil hier ist in einer nicht periodischen, nicht definierbaren Kleberoberfläche zu sehen, die zu nicht reproduzierbaren Klebkraftresultaten führt.

Die DE-C 38 08 706 betrifft eine reversibel haftende, druckempfindliche Selbstklebemasse, die aus Acrylsäureester/Acrylsäure/Acrylnitril-Copolymerisaten, carboxylierten Butadien/Styrol-Copolymerisaten und Weichmachern auf Basis von Alkylestern aufgebaut ist. Der Nachteil derartiger Haftklebemassen ist, daß bei langen Verklebungszeiten der Weichmacher auf die verklebenden Substrate migriert und die Oberfläche verunreinigt.

Aus der EP-B 0 287 306 ist ein ablösbarer Kleber mit einem Copolymer zusammengesetzt aus Vinylmonomeren und vinylungesättigten homopolymerisierbaren Emulgatormonomeren bekannt. Als oberflächenaktive Mittel werden Phosphatemulgatoren eingesetzt. Die Emulgatoren verhindern die Haftklebrigkeit trotz der Anbindung an die Polymerkette und machen den Verbund nicht feuchteresistent.

US-A 5 192 612 beschreibt wiederverklebbare Haftklebemassen, die abtrennbare Tackifier und ein lineares Polycaprolacton enthalten. Derartige Systeme sind aber zur reversiblen Verklebung von Papieroberflächen ungeeignet, oft kommt es zu unerwünschtem Papierabriß.

In der US-A 5 215 812 wird eine wiederverklebbare Haftklebemasse - zusammengesetzt aus einem Polyacrylat (Copolymer: Alkylacrylat/polares Monomer), einem lösemitteldispergierbaren Mikrospherelastomer und einem Binder-Copolymer - beschrieben. Die so konzipierte Haftklebemasse gewährleistet zwar konstante Klebkraftwerte beim Abziehen, die Klebkraft aber ist zu diversen Substraten - besonders zu niederenergetischen Substraten - zu niedrig.

Aus der WO 93/02855 sind wiederverklebbare Kompositionen bekannt, die aus einer Polymermatrix und selbstklebenden Mikrospheren aufgebaut sind. Bei derartigen Abmischungen steigt die Klebkraft abhängig von der Verklebungszeit an, so daß die Haftung auf diversen Materialien zu hoch ausfällt.

Aufgabe der vorliegenden Erfindung ist es, druckempfindliche, reversibel haftende Selbstklebemassen anzugeben, die unter Vermeidung bzw. Überwindung der vorgenannten Nachteile und Schwierigkeiten nach Verklebung rückstandsfrei abgelöst und erneut verklebt und mit wirtschaftlich günstigen Mitteln hergestellt werden können.

Die Aufgabe wird mit der Erfindung dadurch gelöst, daß die reversibel haftende, druckempfindliche Selbstklebemasse aus einem Gemisch der folgenden Komponenten besteht:

a) zwischen 40 und 91 Gew.-Anteilen hydrophilgruppenhaltigem Copolymerisat aus Alkylacrylat, Vinylcarbonsäure und Hydroxyalkylacrylat
und

b) zwischen 9,9 und 58 Gew.-Anteilen Propantriol-1,2,3 (Glycerin)
und

c) zwischen 0,1 und 2 Gew.-Anteilen eines Vernetzungsmittels

Als erfindungswesentliche Komponente enthält die reversibel haftende, rückstandsfrei wiederablösbare Haftklebemasse auf Polyacrylatbasis Glycerin. Eine derartige Haftklebemasse zeichnet sich durch eine akzeptable Soforthaftung, rückstandsfreie Ablösbarkeit und einwandfreie Wiederverklebbarkeit auf diversen Substraten aus. Außerdem weist sie eine gute Kohäsion und eine nicht wesentlich erhöhte Endklebkraft auf.

2

Die erfindungsgemäßen Haftklebemassen in Form von Haftklebestreifen zeigen bei einer Verklebungsdauer von mehreren Wochen eine reversible Haftung sowohl gegenüber polaren (Stahl, Aluminium, Glas) als auch gegenüber unpolaren (Polyethylen, Polypropylen) Substraten.

Die erfindungsgemäßen Haftklebemassen weisen eine relativ hohe Soforthaftung auf, die sich - ausgedrückt als Endklebkraft - nach mehreren Wochen stabilisiert. Durch ein gezieltes Verhältnis Polyacrylathaftkleber/Glycerin ist es möglich, die Haftklebemassen so zu modifizieren, daß die Klebkraftwerte trotz eines relativ hohen Tacks (Anfaßklebkraft) auch nach längerer Verklebungszeit nicht so stark wie bei kommerziellen Haftklebemassen ansteigen. Es ist dabei wichtig, geeignete Copolymerisate auf Polyacrylatbasis erhältlich u.a. aus 40-70 Gew.-Anteilen an Acrylsäurealkylestern mit 2-10 Kohlenstoffatomen im Alkylrest einzusetzen. Als Vertreter dieser Gruppe kann man beispielsweise ein Ethyl-, Butyl-, Isobutyl-, Hexyl-, Heptyl-, 2-Ethylhexyl-, 2-Methylheptyl-, Isooctyl-, Nonyl-, Isononyl-, Decyl- oder Isodecylacrylat erwähnen. Besonders geeignet sind Butylacrylat, 2-Ethylhexylacrylat oder Isooctylacrylat.

Zur Steigerung der Kohäsion und Gewährleistung der rückstandsfreien Wiederablösbarkeit werden bei der Herstellung des erfindungsgemäßen Copolymerisates 10-55 Gew.-Anteile an einer Vinylcarbonsäure eingesetzt. Die Vinylcarbonsäure stammt aus einer Gruppe von (Meth-)acrylsäure, $\beta$-Acryloyloxipropionsäure, Vinylessigsäure, Dimethylacrylsäure, Trichloracrylsäure, Fumarsäure, Crotonsäure, Aconitsäure und Itaconsäure. Besonders geeignet bei der Steigerung der Kohäsion haben sich Acrylsäure und $\beta$-Acryloyloxipropionsäure erwiesen.

Zwecks Verbesserung der Haftung zu niederenergetischen Substraten wie beispielsweise Polyethylen oder Polypropylen wird bei der Synthese des erfindungsgemäßen Copolymerisates ein Acrylsäurehydroxyalkylester eingesetzt. Von den zahlreichen Variationsmöglichkeiten wie beispielsweise 2-Hydroxyethyl(meth-)acrylat, 2-Hydroxypropyl(meth-)acrylat oder 4-Hydroxybutyl(meth-)acrylat wurden die besten Resultate mit 2-Hydroxyethylacrylat und 2-Hydroxypropylacrylat erzielt.

Zur Erzeugung der rückstandsfreien Wiederablösbarkeit zu den hochenergetischen Substraten wie beispielsweise Stahl, Aluminium oder Glas ist der Zusatz von Propantriol- 1,2,3 (Glycerin) besonders geeignet. Generell ist es bei den o.g. hochenergetischen Materialien von Nachteil, daß beim Abziehen der verklebten Haftklebestreifen der Schälwiderstand hoch ist. Der Zusatz von Glycerin zu der Haftklebemasse bringt beim Abziehen die geforderte Sanft- und Weichheit der erfindungsgemäßen Haftklebemasse. Durch entsprechende Variierung der Glycerinkonzentration können solche Oberflächeneigenschaften wie Tack, Klebkraft, Abziehverhalten und Reversibilität der Haftung gesteuert werden.

Es zeigt sich ferner, daß die reversible Verklebung und das rückstandsfreie Ablösen durch die Zugabe von Vernetzer und damit verbundene Steigerung der Kohäsion verbessert wird. Der Vernetzer wird in einer Menge von 0,1 bis 2,0 Gew.-Anteilen eingesetzt und aus einer Gruppe von Metallchelat, Metallsäureester, Epoxid-, Aziridin-, Triazin- oder Melaminformaldehydharz ausgewählt.

Das erfindungsgemäße Copolymerisat auf Polyacrylatbasis wird in einer an sich typischen Weise durch eine Polymerisation in einem organischen Lösemittel oder in wäßrigem Medium als eine Dispersionshaftklebemasse hergestellt. Als typische Lösemittel werden beispielsweise Aceton, Ethylacetat, Methylethylketon, Siedegrenzenbenzin 60/95, Siedegrenzenbenzin 80/110, n-Hexan, n-Heptan, Isopropylalkohol, Toluol oder deren Gemische eingesetzt. Polymerisiert wird zu einem Feststoffgehalt von mindestens 50 Gew.-%. Als Radikalbildner wird ein thermischer Initiator AIBN eingesetzt. Bei der Polymerisation im Wasser werden entsprechende Emulgatoren und als Radikalbildner wasserlösliche Polymerisationsinitiatoren eingesetzt. Zweckmäßig kann man auch den Dispersionen in üblichen Mengen Netzmittel, Verdicker und Entschäumer zusetzen.

Die Erfindung betrifft auch die Verwendung der reversibel haftenden, rückstandsfrei wiederablösbaren Haftklebemassen zur Herstellung von temporären Markierungen, Pflastern, wiederablösbaren Etiketten, Klebebänder zur Montagehilfe und Schutzabdeckungen.

Als flächenförmige Trägermaterialien eignen sich für die Beschichtung mit erfindungsgemäßer Haftklebemasse besonders gut Polyester-, PVC-, Polypropylen, Polyethylen-, Papier und Polyurethanfolie. Besonders bevorzugte Beschichtungsmaterialien sind Polyester-, Polyolefin-Folien und Papier.

Auf diesen erwähnten Trägermaterialien zeigt die aufgetragene erfindungsgemäße Haftklebemasse eine sehr gute Haftung. Auch Papier - falls die Haftklebemasse nicht durchschlägt - ist als ein geeignetes Substrat einzustufen. Die Klebkraftwerte der auf dem Papier beschichteten Haftklebemasse steigen nicht zu hoch an und ermöglichen damit eine reversible Verklebung. Sie eignet sich bestens zur Fertigung von selbstklebenden Gegenständen, die nach mehrwöchiger Verklebungszeit auf beispielsweise Metall, Glas, Kunststoff oder Papier rückstandsfrei und ohne zu spalten wieder abgezogen werden kann.

Im folgenden wird die Erfindung anhand von Beispielen näher erläutert, ohne daß damit eine Beschränkung auf diese Beispiele zu verstehen ist. Selbstverständlich kann der Fachmann geeignete Änderungen aufgrund seines Fachwissens vornehmen, ohne damit den Rahmen der Erfindung zu verlassen.

Beispiel 1:

59 Gew.-Anteile einer im Gemisch Isopropanol/Aceton im Verhältnis 7:3 formulierten Haftklebemasse - zusammengesetzt aus 50 Gew.-Anteilen 2-Ethylhexylacrylat, 40 Gew.-Anteilen Acrylsäure und 10 Gew.-Anteilen 2-Hydroxypropylacrylat (Feststoffgehalt 50 Gew.-%) - werden nach Abmischen mit 40 Gew.-Anteilen Glycerin und 1 Gew.-Anteil an Zirconacetylacetonat auf eine Polyesterfolie aufgebracht und 10 min bei 105 °C im Trockenkanal getrocknet. Der Kleberauftrag betrug 30 $g/m^2$. Die so erhaltenen Haftklebestreifen wurden auf ausgewählte Substrate aufgeklebt und nach einer bestimmten Zeitspanne von dem Substrat abgezogen.

Die Klebkraft (Ablösefestigkeit) wurde durch Ablösen eines Teststreifens von 25 mm Breite von dem verklebten Substrat in einem Winkel von 180 ° mit einer Abzugsgeschwindigkeit von 28 m/s gemessen.

Die resultierenden Klebkraftwerte wurden tabellarisch zusammengefaßt

| Substrat | Klebkraft [N/25 mm] nach ..... | | |
|---|---|---|---|
| | sofort | 3 Tagen | 3 Wochen |
| Polyethylen | 1,5 | 2,0 | 2,8 |
| Polypropylen | 2,5 | 2,8 | 3,5 |
| Glas | 6,5 | 7,5 | 8,5 |
| Aluminium | 9,0 | 9,5 | 11,5 |
| Stahl | 9,5 | 10,5 | 12,5 |

Es wurde auch die Wiederklebkraft auf Polypropylen untersucht:

| Substrat | Wiederklebkraft [N/25 mm] nach ..... Zyklen | | | | | |
|---|---|---|---|---|---|---|
| | sofort | 1 | 3 | 7 | 10 | 30 |
| Polypropylen | 2,5 | 2,5 | 2,5 | 2,4 | 2,3 | 2,1 |

Beispiele 2 bis 20

Analog dem Beispiel 1 wurden die in der Tabelle 1 zusammengesetzten Ausgangsmonomere polymerisiert und nach der Polymerisation mit Glycerin und entsprechenden Vernetzungsmitteln abgemischt.

Abkürzungsverzeichnis :

2-EHA-      2-Ethylhexylacrylat
BA -        Butylacrylat
IO -        Isooctylacrylat
AS -        Acrylsäure
APS -       $\beta$-Acryloyloxypropionsäure
MAS -       Methacrylsäure
HEA -       2-Hydroxyethylacrylat
HPA -       2-Hydroxypropylacrylat
HMPA -      2-Hydroxypropylmethacrylat
ZrACA-      Zirkoniumacetylacetonat
MFH -       Melaminformaldehydharz
PE -        Polyethylen
PP -        Polypropylen

Die relevanten Prüfwerte der auf diesem Wege erhaltenen reversibel haftenden, rückstandsfrei wieder ablösbaren Haftklebemassen wie Klebkraft und Wiederklebkraft wurden in Tabelle 2 zusammengefaßt.

Tabelle 1

| Beispiel | Acrylsäurealkylester | | | Vinylcarbonsäure | | | Hydroxygruppenhaltiges (Meth-)acrylat | | | Glycerin | Vernetzer | | |
|---|---|---|---|---|---|---|---|---|---|---|---|---|---|
| | 2-EHA | BA | IO | AS | APS | MAS | HEA | HPA | HMPA | | ZrACA | AlACA | MFH |
| 2 | -- | -- | 40 | 16 | -- | -- | 3 | -- | -- | 40 | -- | 1 | -- |
| 3 | -- | 52,5 | -- | -- | 27 | -- | -- | 10 | -- | 10 | -- | -- | 0,5 |
| 4 | -- | 41,5 | -- | -- | -- | 17 | -- | 10 | -- | 30 | 1,5 | -- | -- |
| 5 | -- | 27,9 | -- | -- | 16 | -- | -- | -- | 11 | 45 | -- | 0,1 | -- |
| 6 | 48 | -- | -- | 15 | -- | -- | 10 | -- | -- | 25 | -- | -- | 2 |
| 7 | -- | -- | 32,5 | -- | -- | 8 | 8 | -- | -- | 50 | -- | -- | 1,5 |
| 8 | -- | 14 | 14 | -- | 14 | -- | -- | 2 | -- | 55 | -- | -- | 1 |
| 9 | 25,2 | -- | -- | -- | 32 | -- | -- | -- | 7 | 35 | -- | 0,8 | -- |
| 10 | -- | 33,5 | -- | 30 | 8 | -- | 6 | 7 | -- | 15 | 0,5 | -- | -- |
| 11 | -- | -- | 48 | 8 | -- | 8 | -- | -- | 15 | 20 | 1,0 | -- | -- |
| 12 | -- | -- | 33 | -- | 16 | -- | 5,5 | -- | -- | 45 | -- | 0,5 | -- |
| 13 | -- | 18 | -- | 20 | -- | -- | 5,5 | -- | -- | 55 | -- | -- | 1,5 |
| 14 | 20 | 20 | -- | -- | 24 | -- | -- | 14,5 | -- | 20 | -- | 1,5 | -- |
| 15 | -- | -- | 28 | 35 | -- | 5 | -- | -- | 1,4 | 30 | -- | -- | 0,6 |
| 16 | -- | 40 | -- | -- | 34 | -- | 10,8 | -- | -- | 15 | 0,2 | -- | -- |
| 17 | -- | -- | 36 | -- | 12 | -- | -- | 0,6 | 11 | 40 | 0,4 | -- | -- |
| 18 | 20 | 12 | -- | -- | -- | 14 | -- | 7,8 | -- | 45 | -- | 1,2 | -- |
| 19 | 30 | -- | -- | 15 | -- | -- | 3,9 | -- | -- | 50 | 1,1 | -- | -- |
| 20 | -- | 26 | -- | -- | 28,2 | -- | 10 | -- | -- | 35 | -- | -- | 0,8 |

## Tabelle 2

| Beispiel | Substrat | Klebkraft [N/25 mm] nach ... | | | Wiederklebkraft [N/25 mm] nach ...... Zyklen | | | | | |
|---|---|---|---|---|---|---|---|---|---|---|
| | | sofort | 3 Tagen | 3 Wochen | sofort | 1 | 3 | 7 | 10 | 30 |
| 2 | PE | 1,8 | 2,0 | 2,5 | — | — | — | — | — | — |
| | PP | 2,3 | 2,5 | 3,0 | 2,3 | 2,4 | 2,3 | 2,1 | 2,1 | 1,9 |
| | Glas | 5,0 | 5,5 | 6,0 | — | — | — | — | — | — |
| | Al | 8,5 | 9,0 | 9,5 | — | — | — | — | — | — |
| | Stahl | 9,5 | 10,0 | 10,8 | — | — | — | — | — | — |
| 3 | PE | 2,5 | 3,1 | 3,5 | — | — | — | — | — | — |
| | PP | 4,0 | 4,4 | 5,0 | 4,0 | 4,0 | 3,8 | 3,6 | 3,4 | 3,2 |
| | Glas | 7,3 | 7,8 | 8,3 | — | — | — | — | — | — |
| | Al | 9,6 | 10,1 | 10,7 | — | — | — | — | — | — |
| | Stahl | 10,8 | 11,5 | 11,9 | — | — | — | — | — | — |
| 4 | PE | 2,1 | 2,3 | 2,8 | — | — | — | — | — | — |
| | PP | 2,8 | 3,0 | 3,3 | 2,8 | 2,8 | 2,8 | 2,5 | 2,4 | 2,0 |
| | Glas | 5,5 | 6,0 | 6,5 | — | — | — | — | — | — |
| | Al | 7,7 | 7,0 | 8,3 | — | — | — | — | — | — |
| | Stahl | 9,0 | 9,3 | 10,0 | — | — | — | — | — | — |
| 5 | PE | 1,6 | 1,8 | 2,3 | — | — | — | — | — | — |
| | PP | 2,0 | 2,5 | 2,9 | 2,0 | 1,9 | 1,9 | 1,8 | 1,8 | 1,5 |
| | Glas | 4,5 | 4,8 | 5,5 | — | — | — | — | — | — |
| | Al | 8,0 | 8,3 | 8,9 | — | — | — | — | — | — |
| | Stahl | 9,0 | 9,3 | 10,0 | — | — | — | — | — | — |
| 6 | PE | 2,3 | 2,5 | 2,8 | — | — | — | — | — | — |
| | PP | 2,8 | 3,0 | 3,3 | 2,8 | 2,8 | 2,8 | 2,6 | 2,5 | 2,1 |
| | Glas | 7,0 | 7,5 | 8,0 | — | — | — | — | — | — |
| | Al | 9,0 | 9,3 | 10,0 | — | — | — | — | — | — |
| | Stahl | 10,5 | 10,8 | 11,2 | — | — | — | — | — | — |
| 7 | PE | 1,5 | 1,8 | 2,0 | — | — | — | — | — | — |
| | PP | 2,0 | 2,1 | 2,5 | 2,0 | 2,0 | 2,0 | 1,9 | 1,8 | 1,6 |
| | Glas | 4,0 | 4,3 | 5,0 | — | — | — | — | — | — |
| | Al | 7,0 | 7,5 | 7,8 | — | — | — | — | — | — |
| | Stahl | 8,5 | 8,8 | 9,2 | — | — | — | — | — | — |
| 8 | PE | 1,3 | 1,5 | 1,8 | — | — | — | — | — | — |
| | PP | 1,8 | 2,0 | 2,3 | 1,8 | 1,8 | 1,8 | 1,8 | 1,6 | 1,3 |
| | Glas | 4,0 | 4,2 | 4,6 | — | — | — | — | — | — |
| | Al | 7,0 | 7,5 | 7,7 | — | — | — | — | — | — |
| | Stahl | 8,1 | 8,3 | 8,8 | — | — | — | — | — | — |
| 9 | PE | 2,0 | 2,3 | 2,5 | — | — | — | — | — | — |
| | PP | 4,0 | 4,3 | 4,6 | 4,0 | 4,0 | 3,9 | 3,8 | 3,6 | 3,3 |
| | Glas | 5,4 | 5,6 | 6,0 | — | — | — | — | — | — |
| | Al | 7,5 | 7,8 | 8,1 | — | — | — | — | — | — |
| | Stahl | 9,0 | 9,2 | 9,8 | — | — | — | — | — | — |

6

| Beispiel | Substrat | Klebkraft [N/25 mm] nach ... | | | Wiederklebkraft [N/25 mm] nach ...... Zyklen | | | | | |
|---|---|---|---|---|---|---|---|---|---|---|
| | | sofort | 3 Tagen | 3 Wochen | sofort | 1 | 3 | 7 | 10 | 30 |
| 10 | PE | 2,5 | 2,8 | 3,3 | — | — | — | — | — | — |
| | PP | 3,8 | 4,0 | 4,3 | 3,8 | 3,8 | 3,7 | 3,5 | 3,4 | 3,0 |
| | Glas | 7,2 | 7,5 | 7,8 | — | — | — | — | — | — |
| | Al | 9,5 | 10,0 | 10,5 | — | — | — | — | — | — |
| | Stahl | 10,5 | 10,9 | 11,2 | — | — | — | — | — | — |
| 11 | PE | 2,3 | 2,5 | 3,0 | — | — | — | — | — | — |
| | PP | 2,7 | 2,8 | 3,1 | 2,7 | 2,7 | 2,7 | 2,6 | 2,3 | 2,0 |
| | Glas | 6,9 | 7,2 | 7,0 | — | — | — | — | — | — |
| | Al | 9,0 | 9,3 | 10,0 | — | — | — | — | — | — |
| | Stahl | 11,0 | 11,3 | 11,7 | — | — | — | — | — | — |
| 12 | PE | 1,9 | 2,1 | 2,4 | — | — | — | — | — | — |
| | PP | 2,4 | 2,6 | 3,0 | 2,4 | 2,4 | 2,3 | 2,3 | 2,3 | 2,0 |
| | Glas | 4,8 | 5,0 | 5,3 | — | — | — | — | — | — |
| | Al | 8,3 | 8,5 | 8,9 | — | — | — | — | — | — |
| | Stahl | 9,2 | 9,3 | 9,8 | — | — | — | — | — | — |
| 13 | PE | 1,4 | 1,7 | 2,1 | — | — | — | — | — | — |
| | PP | 2,0 | 2,2 | 2,6 | 2,0 | 2,0 | 1,9 | 1,9 | 1,7 | 1,5 |
| | Glas | 4,1 | 4,3 | 4,7 | — | — | — | — | — | — |
| | Al | 7,2 | 7,5 | 7,8 | — | — | — | — | — | — |
| | Stahl | 8,0 | 8,2 | 8,7 | — | — | — | — | — | — |
| 14 | PE | 2,3 | 2,5 | 2,8 | — | — | — | — | — | — |
| | PP | 2,9 | 3,0 | 3,4 | 2,9 | 2,9 | 2,7 | 2,7 | 2,5 | 2,3 |
| | Glas | 7,1 | 7,4 | 7,8 | — | — | — | — | — | — |
| | Al | 9,0 | 9,3 | 9,6 | — | — | — | — | — | — |
| | Stahl | 10,4 | 10,7 | 11,1 | — | — | — | — | — | — |
| 15 | PE | 2,0 | 2,3 | 2,6 | — | — | — | — | — | — |
| | PP | 2,9 | 3,0 | 3,2 | 2,9 | 2,9 | 2,9 | 2,8 | 2,6 | 2,4 |
| | Glas | 5,5 | 5,7 | 6,0 | — | — | — | — | — | — |
| | Al | 7,6 | 7,9 | 8,4 | — | — | — | — | — | — |
| | Stahl | 9,0 | 9,5 | 10,1 | — | — | — | — | — | — |
| 16 | PE | 2,5 | 2,8 | 3,0 | — | — | — | — | — | — |
| | PP | 3,6 | 3,8 | 4,1 | 3,6 | 3,6 | 3,6 | 3,5 | 3,3 | 3,2 |
| | Glas | 7,2 | 7,5 | 7,9 | — | — | — | — | — | — |
| | Al | 9,6 | 9,8 | 10,1 | — | — | — | — | — | — |
| | Stahl | 10,6 | 10,9 | 11,3 | — | — | — | — | — | — |
| 17 | PE | 1,7 | 1,9 | 2,1 | — | — | — | — | — | — |
| | PP | 2,2 | 2,3 | 2,6 | 2,2 | 2,2 | 2,2 | 2,1 | 2,0 | 1,8 |
| | Glas | 5,0 | 5,5 | 6,1 | — | — | — | — | — | — |
| | Al | 8,4 | 8,7 | 9,0 | — | — | — | — | — | — |
| | Stahl | 9,3 | 9,5 | 9,9 | — | — | — | — | — | — |

| Beispiel | Substrat | Klebkraft [N/25 mm] nach ... | | | Wiederklebkraft [N/25 mm] nach ...... Zyklen | | | | | |
|---|---|---|---|---|---|---|---|---|---|---|
| | | sofort | 3 Tagen | 3 Wochen | sofort | 1 | 3 | 7 | 10 | 30 |
| 18 | PE | 1,9 | 2,1 | 2,3 | – | – | – | – | – | – |
| | PP | 2,4 | 2,6 | 2,9 | 2,4 | 2,4 | 2,4 | 2,2 | 2,1 | 2,0 |
| | Glas | 4,6 | 4,9 | 5,4 | – | – | – | – | – | – |
| | Al | 8,0 | 8,2 | 8,5 | – | – | – | – | – | – |
| | Stahl | 9,0 | 9,2 | 9,6 | – | – | – | – | – | – |
| 19 | PE | 1,5 | 1,7 | 1,9 | – | – | – | – | – | – |
| | PP | 2,0 | 2,2 | 2,5 | 2,0 | 2,0 | 2,0 | 1,8 | 1,7 | 1,5 |
| | Glas | 4,2 | 4,3 | 4,6 | – | – | – | – | – | – |
| | Al | 7,2 | 7,5 | 7,9 | – | – | – | – | – | – |
| | Stahl | 8,6 | 8,9 | 9,3 | – | – | – | – | – | – |
| 20 | PE | 2,0 | 2,2 | 2,5 | – | – | – | – | – | – |
| | PP | 4,0 | 4,1 | 4,3 | 4,0 | 4,0 | 4,0 | 3,8 | 3,7 | 3,6 |
| | Glas | 5,2 | 5,5 | 5,9 | – | – | – | – | – | – |
| | Al | 7,6 | 7,9 | 8,5 | – | – | – | – | – | – |
| | Stahl | 9,2 | 9,5 | 9,9 | – | – | – | – | – | – |

Fazit:

Wie den Tabellen zu entnehmen ist, bleiben die gemessenen Klebkraftwerte auf den zur Ausprüfung hinzugezogenen Substraten relativ konstant. Auch die Wiederklebrigkeit bleibt praktisch unverändert.

**Patentansprüche**

1. Reversibel haftende, rückstandsfrei wiederablösbare Haftklebemasse, dadurch gekennzeichnet, daß sie aus einem Gemisch der folgenden Komponenten zusammengesetzt ist:
   a) zwischen 40 und 91 Gew.-Anteilen hydrophilgruppenhaltigem Copolymerisat auf Polyacrylatbasis, erhältlich aus 40 bis 70 Gew.-Anteilen eines Acrylsäurealkylesters mit 2 bis 10 Kohlenstoffatomen im Alkylrest, 10 bis 55 Gew.-Anteilen einer Vinylcarbonsäure und 5 bis 20 Gew.-Anteilen eines (Meth-)acrylsäurehydroxyalkylesters,
   b) zwischen 9,9 und 58 Gew.-Anteilen von Propantriol-1,2,3 und
   c) zwischen 0,1 und 2 Gew.-Anteilen eines Vernetzungsmittels.

2. Haftklebemasse nach Anspruch 1, dadurch gekennzeichnet, daß der Acrylsäurealkylester mit 2 bis 10 Kohlenstoffatomen im Alkylrest ein Ethyl-, Butyl-, Isobutyl-, Hexyl-, Heptyl-, 2-Ethylhexyl-, 2-Methylheptyl-, Isooctyl-, Nonyl-, Isononyl-, Decyl- oder Isodecylacrylat ist.

3. Haftklebemasse nach Ansprüchen 1 und 2, dadurch gekennzeichnet, daß die Vinylcarbonsäure aus der Gruppe von (Meth-)acrylsäure, β-Acryloyloxypropionsäure, Vinylessigsäure, Dimethylacrylsäure, Trichloracrylsäure, Fumarsäure, Crotonsäure, Aconitsäure und Itaconsäure ausgewählt ist.

4. Haftklebemasse nach Ansprüchen 1 bis 3, dadurch gekennzeichnet, daß das (Meth-)acrylsäurehydroxyalkylester ein 2-Hydroxyethyl(meth-)acrylat, 2-Hydroxypropyl(meth-)acrylat oder 4-Hydroxybutyl(meth-)acrylat ist.

5. Haftklebemasse nach Ansprüchen 1 bis 4, dadurch gekennzeichnet, daß das Vernetzungsmittel ein Metallchelat, ein Metallsäureester, ein Epoxid-, ein Aziridin-, ein Triazin- oder ein Melaminformaldehydharz ist.

6. Verfahren zur Herstellung der Haftklebemasse nach Ansprüchen 1 bis 5, dadurch gekennzeichnet, daß das hydrophilgruppenhaltige Copolymerisat in einem organischen Lösemittel oder in Wasser hergestellt wird und nachfolgend die Komponenten b) und c) zugesetzt werden.

7. Verwendung der Haftklebemasse nach Anspruch 1 zur Herstellung von temporären Markierungen, Pflastern, wiederablösbaren Etiketten, Klebebändern zur Montagehilfe und Schutzabdeckungen.

| Europäisches Patentamt | **EUROPÄISCHER RECHERCHENBERICHT** | Nummer der Anmeldung EP 94 11 9228 |

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | WO-A-92 10553 (LOHMANN GMBH & CO KG ) 25.Juni 1992 * Seite 4, Absatz 4; Anspruch 11; Tabelle 2 * | 1 | C09J133/06 |
| | --- | | |
| A | EP-A-0 374 725 (LOHMANN THERAPIE SYST LTS ) 27.Juni 1990 * Seite 3, Zeile 25 - Zeile 28; Anspruch 14 * | 1 | |
| | --- | | |
| A | EP-A-0 326 530 (CASCO NOBEL AB ) 2.August 1989 * Spalte 3, Zeile 33 - Zeile 37; Beispiele 1-3 * | 1 | |
| | ----- | | |

**RECHERCHIERTE SACHGEBIETE (Int.Cl.6)**

C09J
C08K

Der vorliegende Recherchenbericht wurde für alle Patentansprüche erstellt

| Recherchenort | Abschlußdatum der Recherche | Prüfer |
|---|---|---|
| DEN HAAG | 28.Februar 1995 | Schueler, D |